# FASCICULE DE BREVET EUROPEEN

(11) **EP 4 229 325 B1**
(45) Date de publication et mention de la délivrance du brevet: **08.07.2026**
(21) Numéro de dépôt: 21789744.6
(22) Date de dépôt: 08.10.2021
(51) Int. Cl.: F17C 5/00

(54) **PROCÉDÉ ET SYSTÈME DE TRANSFERT D'HYDROGÈNE CRYOGÉNIQUE**
VERFAHREN UND SYSTEM ZUR ÜBERTRAGUNG VON KRYOGENEM WASSERSTOFF
METHOD AND SYSTEM FOR TRANSFERRING CRYOGENIC HYDROGEN

(30) Priorité: 19.10.2020 FR 2010706
(43) Date de publication de la demande: 23.08.2023
(73) Titulaire: F2M, 86530 Naintre (FR)
(72) Inventeur: MICHALSKI, Eric, 86270 LESIGNY SUR CREUSE (FR)
(74) Mandataire: Lequien, Philippe
(86) Numéro de dépôt international: PCT/EP2021/077926
(87) Numéro de publication internationale: WO 2022/084071

(56) Documents cités:
- WO-A1-2019/009794
- FR-A1- 2 987 106
- FR-A1- 3 008 473
- FR-A1- 3 079 006
- FR-A1- 3 090 756

## Description

Le domaine de l'invention est celui des procédés de compression d'un milieu cryogène. L'invention concerne plus particulièrement un procédé de transfert d'hydrogène par le biais d'une compression cryogène d'hydrogène depuis un état liquide jusqu'à un état gazeux. L'expression « milieu cryogène » désigne habituellement un gaz liquéfié à basse température et qui a une température relativement basse.

De l'hydrogène cryogène est en général à une température comprise entre 20 K et 28 K. Les procédés de compression de milieu cryogène sont classiquement utilisés pour le remplissage et le transvasement de réservoirs, tel que cela est le cas lorsqu'on remplit des réservoirs de véhicule utilisant de l'hydrogène.

Le document de brevet français publié sous le numéro FR2987106 décrit un procédé de compression d'un milieu cryogène, et plus spécifiquement d'hydrogène cryogénique.

Selon cette technique, l'hydrogène liquide cryogène est comprimé en deux étapes de compression pour passer d'une pression initiale à une pression finale en passant par une pression intermédiaire dans lequel l'hydrogène est dans un état supercritique.

Cette technique met en œuvre un dispositif de pompe composé de deux compresseurs mono-pistons entrainés par un moyen d'entraînement commun qui est par exemple un moteur électrique avec une double transmission.

L'hydrogène dans son état initial est à une pression comprise entre 1 et 3 bars.

Suite à la compression réalisée dans la chambre de compression du premier compresseur, l'hydrogène est refoulé dans un réservoir de compensation installé entre les deux chambres de compression. L'hydrogène est alors dans un état intermédiaire à une pression comprise entre 30 et 70 bars.

Ensuite, la compression réalisée dans la chambre de compression du deuxième compresseur permet d'amener l'hydrogène jusqu'à une pression finale d'au moins 400 bars.

La réalisation d'un procédé de compression de l'hydrogène cryogène avec deux étages de compression dont le premier est conçu pour amener l'hydrogène dans un état supercritique permet d'améliorer le rendement d'une opération de transfert de l'hydrogène depuis un stockage à un état liquide et à faible pression jusqu'à un réservoir dans lequel l'hydrogène est dans un état gazeux et présente une pression à des niveaux compris entre 700 et 900 bars.

Toutefois, il existe toujours un besoin d'amélioration du rendement de cette opération de transfert.

Aussi, il doit être remarqué que les moyens de compression mis en œuvre sont soumis à des contraintes particulièrement importantes pouvant impacter leur rendement.

Par exemple, une contrainte est notamment relative au différentiel de pression entre le réservoir de stockage initial de l'hydrogène, dans lequel l'hydrogène est à une pression de l'ordre de 10 bars, et le réservoir final, dans lequel l'hydrogène est à une pression pouvant atteindre 900 bars. Les compresseurs employés doivent ainsi être conçus pour supporter l'effort de compression attendu.

De plus, il peut être observé des variations de pression dans le réservoir de stockage initial susceptibles d'impacter négativement le rendement du procédé. Notamment, un réservoir de stockage entièrement rempli présente une pression initiale, par exemple de 10 bars, et voit cette pression diminuer au fur et à mesure que le réservoir de stockage se vide.

L'invention a notamment pour objectif de répondre à ce besoin.

Plus précisément, l'invention a pour objectif de proposer un procédé de compression d'hydrogène cryogène du type décrit dans le document de brevet publié sous le numéro FR2987106, dont le rendement est amélioré.

FR3090756A1 divulgue également un tel procédé.

L'invention a également pour objectif de fournir un tel procédé permettant d'optimiser le fonctionnement et le rendement des moyens de compression mis en œuvre.

L'invention a encore pour objectif de fournir un tel procédé qui prend en compte la baisse de pression se produisant dans un réservoir de stockage initial de l'hydrogène liquide. Ces objectifs, ainsi que d'autres qui apparaitront par la suite, sont atteints grâce à l'invention qui a pour objet un procédé de transfert d'hydrogène depuis un premier réservoir dans lequel l'hydrogène est à un état initial liquide à une pression de l'ordre de 10 bars jusqu'à un deuxième réservoir dans lequel l'hydrogène est à état final à une pression supérieure ou égale à 500 bars, le procédé comprenant :
- une première étape de pompage de l'hydrogène depuis son état initial jusqu'à un état intermédiaire dans lequel l'hydrogène présente une pression supérieure à celle de son état initial ;
- une deuxième étape de pompage de l'hydrogène depuis son état intermédiaire jusqu'à son état final ;

la première étape de pompage et la deuxième étape de pompage étant réalisées respectivement par des premiers moyens de compression et des seconds moyens de compression distincts l'un de l'autre ;
caractérisé en ce que les premiers moyens de compression et les seconds moyens de compression fonctionnent chacun à une fréquence de fonctionnement, les fréquences de fonctionnement étant indépendantes l'une de l'autre, la fréquence de fonctionnement des premiers moyens de compression étant asservie en fonction de la pression de l'hydrogène au sortir de la première étape de pompage pour la maintenir dans une plage de pression au sortir de la première étape de pompage correspondant à des conditions supercritiques, caractérisé en ce que la fréquence de fonctionnement des premiers moyens de compression (21) est également asservie à la pression de l'hydrogène dans le premier réservoir (10), pour comprimer l'hydrogène jusqu'à une pression cible variable au sein de la plage de pression au sortir de la première étape de pompage (P1), la pression cible variable étant fonction de la pression de l'hydrogène dans le premier réservoir (10).

Par conditions supercritiques, il est entendu que l'hydrogène est dans un état supercritique, ou en d'autres termes dans une phase supercritique, correspondant à une plage de pression et une plage de température connues (essentiellement une plage de pression de 50 bars à 90 bars pour une température de 28K à 40K).

Grâce au procédé selon l'invention, l'hydrogène au sortir des premiers moyens de compression est stabilisé dans des conditions supercritiques par le seul fonctionnement des premiers moyens de compression au cours de la première étape de pompage. L'hydrogène dans son état intermédiaire est donc dans un état supercritique et reste dans cet état supercritique sans nécessiter un relargage de ce gaz par le biais d'une soupape de décompression tel que cela est le cas dans l'art antérieur.

Grâce à l'asservissement de la fréquence de fonctionnement des premiers moyens de compression pour maintenir l'hydrogène dans un état supercritique au sortir des premiers moyens de compression, alors les seconds moyens de compression fonctionnent de manière stable et n'ont pas à pallier une variation de la température et/ou de la pression de l'hydrogène en dehors des conditions supercritiques au sortir de la première étape de pompage.

De ce fait, la deuxième étape de pompage, qui met en œuvre des moyens de compression fournissant un effort relativement important, est plus efficiente.

Grâce à la détection de la pression de l'hydrogène au sortir des premiers moyens de compression, alors on détecte des variations notamment induites par des fluctuations de pression du premier réservoir. L'asservissement de la fréquence de fonctionnement des premiers moyens de compression permet de compenser ces fluctuations pour s'assurer que l'hydrogène au sortir de la première étape de pompage soit toujours dans un état supercritique, sans nécessiter l'évacuation d'un surplus de pression d'hydrogène pour maintenir l'hydrogène dans son état supercritique.

Le procédé selon l'invention présente ainsi un meilleur rendement que ceux de l'art antérieur.

En captant la température au sortir de la première étape de pompage, et en d'autres termes au sortir des premiers moyens de compression, alors il est plus aisé de déterminer si l'hydrogène au sortir de cette première étape de pompage est bien dans un état supercritique.

En effet, avec uniquement la pression, il est déjà possible de déterminer si l'hydrogène est dans un état supercritique par le biais de calculs. Toutefois, en adjoignant une mesure de température, alors il est plus aisé de déterminer si l'hydrogène est bien dans des conditions supercritiques.

Selon un mode de réalisation préféré, la fréquence de fonctionnement des premiers moyens de compression est également asservie en fonction de la pression de l'hydrogène dans le premier réservoir, pour comprimer l'hydrogène jusqu'à une pression cible variable au sein de la plage de pression au sortir de la première étape de pompage, la pression cible variable étant fonction de la pression de l'hydrogène dans le premier réservoir.

Ce mode de réalisation augmente de manière notable l'efficacité du procédé.

En effet, au fur et à mesure du procédé de transfert d'hydrogène, le premier réservoir se vide. Il s'en suit une baisse de pression dans ce premier réservoir.

La variation de pression au sein de ce premier réservoir impacte le procédé de transfert. Grâce à la détermination de la pression de l'hydrogène dans le premier réservoir et à la définition d'une pression cible variable au sein de la plage de pression pour l'asservissement de la fréquence de fonctionnement des premiers moyens de compression, alors il est possible d'améliorer le rendement du procédé.

Avantageusement, le procédé comprend une étape préalable de détermination d'une table de correspondance des pressions de l'hydrogène dans le premier réservoir avec les pressions cibles au sortir de la première étape de pompage,
dans laquelle, pour une pression de l'hydrogène dans le premier réservoir :
- on calcule une variation d'une valeur de vaporisation partielle de l'hydrogène intervenant entre le premier réservoir et les seconds moyens de compression au cours d'une variation de la pression au sein de la plage de pression au sortir de la première étape de pompage
- on sélectionne la pression, au sein de la plage de pression au sortir de la première étape de pompage, qui engendre la valeur de vaporisation partielle de l'hydrogène la plus faible, cette pression formant la pression cible au sein de la plage de pression au sortir de la première étape de pompage.

De cette manière, le rendement du procédé est encore amélioré.

En effet, le procédé permet alors d'obtenir un réglage particulièrement précis de l'asservissement de la fréquence de fonctionnement des premiers moyens de compression et ce notamment pour compenser les fuites d'hydrogène résultant de la vaporisation partielle de cet hydrogène inhérente à ce type de gaz lors de tout procédé de transfert. Cette étape préalable de détermination permet de connaître de manière spécifique la pression cible auquel l'hydrogène doit être amené dans son état intermédiaire en fonction de la pression réelle de cet hydrogène dans le premier réservoir.

Grâce à cette détermination spécifique, prenant alors en compte les caractéristiques physiques réelles d'une installation de transfert d'hydrogène mettant en œuvre le procédé de transfert, alors la pression cible peut fluctuer au fur et à mesure de la baisse de pression de l'hydrogène dans le premier réservoir pendant le transfert.

Selon une caractéristique avantageuse, les seconds moyens de compression sont mis en fonctionnement et maintenus en fonctionnement si l'hydrogène est dans les conditions supercritiques au sortir de la première étape de pompage.

De cette façon, les seconds moyens de compression ne fonctionnent pas si l'hydrogène au sortir de la première étape de pompage n'est pas dans des conditions supercritiques, ce qui évite de faire fonctionner les seconds moyens de compression de manière non efficiente.

Avantageusement, le procédé comprend une récupération des pertes d'hydrogène gazeux au cours de la première étape de pompage et de la deuxième étape de pompage, et une réinjection de ces pertes d'hydrogène gazeux dans le premier réservoir.

Grâce à cette récupération et à cette réinjection, la baisse de pression dans le premier réservoir résultant du transfert de l'hydrogène liquide à partir de ce réservoir est partiellement compensée.

Ces pertes d'hydrogène peuvent résulter de fuites internes de compression, inhérentes à la compression de l'hydrogène, ou de la vaporisation partielle de l'hydrogène.

Le rendement du procédé est ainsi à nouveau encore amélioré.

Préférentiellement, dans son état intermédiaire, l'hydrogène présente une pression comprise entre 50 bars et 90 bars.

Avantageusement, dans son état intermédiaire, l'hydrogène présente une température comprise entre 28 K et 40 K.

L'invention a également pour objet un système de transfert d'hydrogène comprenant :
- un premier réservoir dans lequel l'hydrogène est à un état initial liquide à une pression de l'ordre de 10 bars ;
- un deuxième réservoir dans lequel l'hydrogène est à un état final à une pression supérieure ou égale à 500 bars ;
- des premiers moyens de compression couplés au premier réservoir pour extraire de l'hydrogène, le comprimer et l'envoyer dans un volume intermédiaire ;
- des seconds moyens de compression distincts des premiers moyens de compression, les seconds moyens de compression étant couplés au volume intermédiaire et au deuxième réservoir pour extraire de l'hydrogène du volume intermédiaire, le comprimer et l'envoyer dans le deuxième réservoir,
caractérisé en ce qu'il comprend également :
- au moins un capteur intermédiaire, dont un capteur de pression destiné à capter la pression dans le volume intermédiaire ;
- des premiers moyens d'asservissement pour asservir en fréquence de fonctionnement les premiers moyens de compression en fonction de la pression captée par le capteur de pression du ou des capteurs intermédiaires, en vue de maintenir l'hydrogène du volume intermédiaire dans un état
supercritique, en ce qu'il comprend un capteur de pression (111) associé au premier réservoir (10), et en ce que les premiers moyens d'asservissement (51) intègrent des moyens de définition (511) d'une pression cible variable au sein d'une plage de pression correspondant à des conditions supercritiques, la pression cible variable étant fonction d'une pression captée dans le premier réservoir (10), les premiers moyens d'asservissement (51) modulant la fréquence de fonctionnement des premiers moyens de compression (21) pour atteindre la pression cible variable dans le volume intermédiaire (4).

Un tel système présente les avantages du procédé décrit précédemment, et notamment un meilleur rendement que celui des systèmes de transfert d'hydrogène selon l'art antérieur. Avantageusement, les capteurs intermédiaires comprennent également un capteur de température.

De manière similaire aux avantages précédemment décrits, l'adjonction d'un capteur de température au niveau des capteurs intermédiaires facilite la détermination de l'état super critique dans le volume intermédiaire.

De cette manière, le système de transfert prend également en compte la variation de pression du premier réservoir au fur et à mesure du transfert de l'hydrogène.

Le rendement du système est ainsi amélioré.

D'autres caractéristiques et avantages de l'invention apparaîtront plus clairement à la lecture de la description suivante d'un mode de réalisation préférentiel de l'invention, donné à titre d'exemple illustratif et non limitatif, et du dessin annexé :
[Fig. 1] la figure 1 est une représentation schématique illustrant un système de transfert d'hydrogène selon l'invention ;
[Fig. 2] la figure 2 est une illustration schématique illustrant un procédé de transfert d'hydrogène selon l'invention.

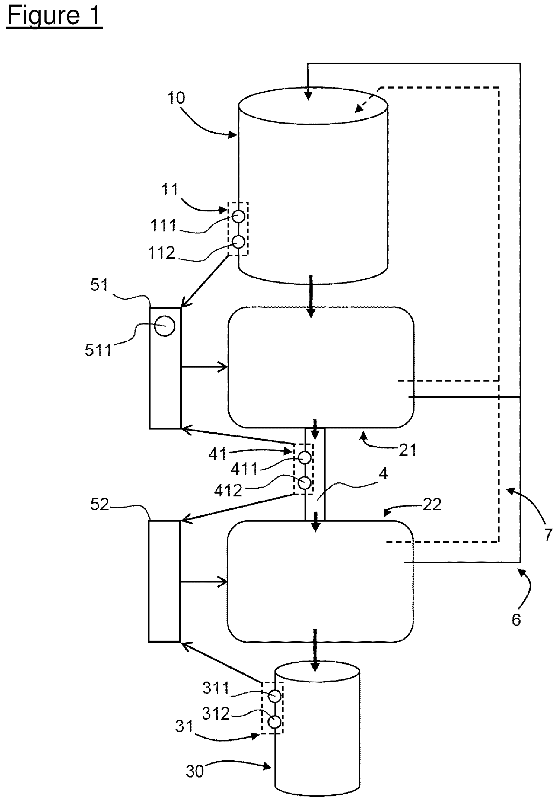

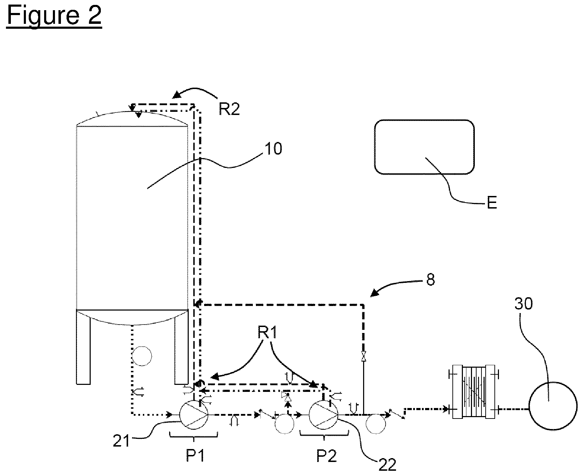

En référence aux figures 1 et 2, un système de transfert d'hydrogène selon l'invention, et un procédé de transfert d'hydrogène selon l'invention sont décrits décrit ci-après.

Ce système de transfert d'hydrogène comprend :
- un premier réservoir 10 ;
- des premiers moyens de compression 21 ;
- des seconds moyens de compression 22 ;
- un deuxième réservoir 30.

Le système de transfert d'hydrogène et le procédé, sont destinés à transférer de l'hydrogène depuis le premier réservoir 10 jusqu'au deuxième réservoir 30.

Dans le premier réservoir, l'hydrogène est à un état initial liquide à une pression de l'ordre de 10 bars.

De manière générale, dans le premier réservoir, l'hydrogène, à son état initial, peut varier entre une pression de 1 bar et une pression de 12 bars. Plus communément, la pression varie entre 6 bars et 10 bars.

Dans ce premier réservoir 10, l'hydrogène est classiquement à une température de 20 K et tend à être maintenu à cette température.

Dans le deuxième réservoir 30, l'hydrogène est destiné à être dans un état final à une pression supérieure ou égale à 500 bars. Notamment, l'hydrogène peut atteindre une pression supérieure à 900 bars.

L'hydrogène est stocké dans ce deuxième réservoir 30 à une température d'environ 100 K. Le deuxième réservoir peut correspondre à un réservoir de véhicule.

Les premiers moyens de compression 21 sont couplés au premier réservoir 10 pour extraire l'hydrogène du premier réservoir 10.

Les premiers moyens de compression 21 compriment l'hydrogène et l'envoie dans un volume intermédiaire 4.

Ce volume intermédiaire 4 correspond notamment à une conduite reliant les premiers moyens de compression 21 aux seconds moyens de compression 22.

Les seconds moyens de compression 22 sont couplés au volume intermédiaire 4 et au deuxième réservoir 30.

Les premiers moyens de compression 21 et les seconds moyens de compression 22 sont chacun formés par une pompe cryogénique présentant une fréquence de fonctionnement propre. Par exemple, ces pompes cryogéniques peuvent être animées par des moteurs électriques.

Les seconds moyens de compression 22 sont distincts des premiers moyens de compression 21, c'est-à-dire que les seconds moyens de compression 22 et les premiers moyens de compression 21 ne sont pas formés par une seule et unique pompe cryogénique.

Les premiers moyens de compression 21 et les seconds moyens de compression 22 fonctionnent chacun à leur propre fréquence de fonctionnement.

Les seconds moyens de compression 22 extraient de l'hydrogène depuis le volume intermédiaire 4, le compriment, et l'envoient dans le deuxième réservoir 30.

Selon le présent mode de réalisation, le système de transfert comprend également :
- des capteurs initiaux 11, associés au premier réservoir 10 ;
- des capteurs intermédiaires 41, associés au volume intermédiaire 4 ;
- des capteurs finaux 31, associés au deuxième réservoir 30.

Plus précisément, les capteurs initiaux 11 comprennent un capteur de pression 111 et un capteur de température 112 destinés respectivement à capter une pression et une température dans le premier réservoir 10.

Les capteurs intermédiaires 41 comprennent quant à eux un capteur de pression 411 et un capteur de température 412 qui sont destinés respectivement à capter une pression et une température dans le volume intermédiaire 4.

Les capteurs finaux 31 comprennent un capteur de pression 311 et un capteur de température 312 destinés respectivement à capter une pression et une température dans le deuxième réservoir 30.

Selon le principe de l'invention, le système de transfert d'hydrogène comprend également des premiers moyens d'asservissement 51.

Ces premiers moyens d'asservissement 51 asservissent la fréquence de fonctionnement des premiers moyens de compression 21.

En d'autres termes, les premiers moyens d'asservissement 51 asservissent en fréquence de fonctionnement les premiers moyens de compression 21.

Ces premiers moyens d'asservissement 51 sont associés aux capteurs initiaux 11 et aux capteurs intermédiaires 41, et notamment au capteur de pression 411.

A titre principal, les premiers moyens d'asservissement 51 asservissent la fréquence de fonctionnement des premiers moyens de compression 21 en fonction de la pression captée par le capteur de pression 411 des capteurs intermédiaires 41.

Selon le principe de l'invention, les premiers moyens d'asservissement 51 réalisent cet asservissement en vue de maintenir l'hydrogène du volume intermédiaire 4 dans un état supercritique.

Par état supercritique, il est entendu classiquement que le fluide en question, ici de l'hydrogène, est maintenu au-delà de son point critique caractérisé par une température et une pression précises, et n'est ni solide, ni gazeux, ni liquide. Cet état supercritique est également nommé « phase supercritique ».

Selon le présent mode de réalisation, les premiers moyens d'asservissement 51 comprennent des moyens de définition 511 d'une pression cible variable au sein d'une plage de pression correspondant à des conditions supercritiques, ou en d'autres termes à un état supercritique de l'hydrogène.

Tel que cela est détaillé par la suite, la pression cible variable est fonction d'une pression captée dans le premier réservoir 10.

Les premiers moyens d'asservissement 51 modulent la fréquence de fonctionnement des premiers moyens de compression 21 pour atteindre la pression cible variable dans le volume intermédiaire 4.

Ces premiers moyens d'asservissement 51 peuvent notamment être formés par un contrôleur électronique.

Le système de transfert d'hydrogène comprend également, selon le présent mode de réalisation, des deuxièmes moyens d'asservissement 52 qui sont associés aux capteurs intermédiaires 41 et aux capteurs finaux 31.

Les deuxièmes moyens d'asservissement 52 sont couplés aux seconds moyens de compression 22 pour asservir leur fréquence de fonctionnement.

Ces deuxièmes moyens d'asservissement 52 peuvent notamment être formés par un contrôleur électronique.

Enfin, le système de transfert selon le présent mode de réalisation comprend des circuits de récupération de pertes d'hydrogène gazeux.

Plus précisément, le système comprend :
- un premier circuit 6 de récupération de fuites internes de compression d'hydrogène gazeux, et
- un deuxième circuit 7 de récupération d'hydrogène gazeux résultat de la vaporisation partielle (également nommé « boil-off » en langue anglaise).

Ces circuits de récupération sont couplés au premier réservoir 10, aux premiers moyens de compression 21 et aux seconds moyens de compression 22.

Les circuits de récupération récupèrent des pertes d'hydrogène gazeux intervenants au niveau des premiers moyens de compression 21 et des seconds moyens de compression 22 pour les réinjecter dans le premier réservoir 10.

Les températures des pertes d'hydrogène gazeux peuvent être captées et analysées afin de s'assurer du bon fonctionnement du système.

En conséquence, une baisse de pression intervenant dans le premier réservoir 10 sous l'effet du transfert de l'hydrogène est partiellement compensée par la réinjection des pertes d'hydrogène gazeux dans le premier réservoir 10.

Le système de transfert d'hydrogène décrit précédemment met en œuvre le procédé de transfert selon l'invention.

En référence à la figure 2, ce procédé de transfert d'hydrogène comprend :
- une première étape de pompage P1 de l'hydrogène depuis son état initial jusqu'à un état intermédiaire dans lequel l'hydrogène présente une pression supérieure à celle de son état initial ;
- une deuxième étape de pompage P2 de l'hydrogène depuis son état intermédiaire pour l'amener jusqu'à son état final.

La première étape de pompage P1 de l'hydrogène est mise en œuvre par les premiers moyens de compression 21 et par les premiers moyens d'asservissement 51.

La deuxième étape de pompage P2 est quant à elle mise en œuvre par les seconds moyens de compression 22 ainsi que par les deuxièmes moyens d'asservissement 52.

La première étape de pompage P1 et la deuxième étape de pompage P2 sont réalisées respectivement par des moyens de compression qui sont distincts les uns des autres, tel que cela est explicité précédemment.

Les premiers moyens de compression 21 et les seconds moyens de compression 22 fonctionnent chacun à une fréquence de fonctionnement indépendante l'une de l'autre, c'est-à-dire que la fréquence de fonctionnement des seconds moyens de compression 22 n'est pas liée mécaniquement à la fréquence de fonctionnement des premiers moyens de compression 21.

Lors de la première étape de pompage P1, et selon le principe de l'invention, la fréquence de fonctionnement des premiers moyens de compression 21 est asservie en fonction de la pression de l'hydrogène au sortir de cette première étape de pompage P1, ou en d'autres termes, au sortir des premiers moyens de compression 21, dans le volume intermédiaire 4. Cet asservissement est conçu pour maintenir la pression de l'hydrogène dans le volume intermédiaire 4 dans une plage de pression correspondant à des conditions supercritiques de l'hydrogène.

Dans son état intermédiaire l'hydrogène doit présenter une pression comprise entre 50 bars et 90 bars, et une température comprise entre 28 K et 40 K.

Au sein de ces plages, l'hydrogène, dans son état intermédiaire, doit également être dans un état supercritique, et les conditions de pression et de température sont ainsi des conditions dites supercritiques.

Selon le présent mode de réalisation du procédé, la fréquence de fonctionnement des premiers moyens de compression 21 est également asservie en fonction de la température de l'hydrogène au sortir de la première étape de pompage P1 pour le maintenir dans une plage de température, au sortir de la première étape de pompage P1, correspondant aux conditions supercritiques.

Toujours selon le présent mode de réalisation, la fréquence de fonctionnement des premiers moyens de compression 21, au cours de la première étape de pompage P1, est également asservie en fonction de la pression de l'hydrogène dans le premier réservoir 10, pour comprimer l'hydrogène jusqu'à une pression, dite « pression cible variable », au sein de la plage de pression au sortir de la première étape de pompage P1.

Cette pression cible variable est fonction de la pression de l'hydrogène dans le premier réservoir 10.

Notamment, au sein de la plage de pression correspondant à des conditions supercritiques de l'hydrogène, une pression cible est déterminée, et c'est pour atteindre cette pression cible que la fréquence de fonctionnement des premiers moyens de compression 21 est modulée. La fréquence de fonctionnement des premiers moyens de compression 21 varie ainsi pour augmenter ou diminuer la pression dans le volume intermédiaire 4 pour la maintenir dans une plage de température correspondant aux conditions supercritiques de l'hydrogène.

Pour simplifier l'asservissement des premiers moyens de compression 21, le procédé comprend une étape préalable de détermination E d'une table de correspondance des pressions de l'hydrogène dans le premier réservoir 10 avec les pressions cibles au sortir de la première étape de pompage P1.

Grâce à cette table de correspondance, il est alors possible d'obtenir, pour une pression donnée de l'hydrogène dans le premier réservoir 10, détectée à l'aide du capteur de pression 111 des capteurs initiaux 11, à quelle pression cible la première étape de pompage P1 doit amener l'hydrogène dans le volume intermédiaire 4.

Lors de l'étape préalable de détermination E d'une table de correspondance, et pour une pression de l'hydrogène dans le premier réservoir 10, alors successivement :
- il est calculé une variation d'une valeur de vaporisation partielle de l'hydrogène qui intervient entre le premier réservoir 10 et les seconds moyens de compression 22 au cours d'une variation de la pression au sein de la plage de pression au sortir de la première étape de pompage P1 ;
- il est sélectionné la pression, au sein de la plage de pression au sortir de la première étape de pompage P1, qui engendre la valeur de vaporisation partielle de l'hydrogène la plus faible, cette pression formant la pression cible au sein de la plage de pression au sortir de la première étape de pompage P1.

Cette étape préalable de détermination E peut être mise en œuvre par informatique par le biais d'un modèle pour faciliter le calcul et la sélection des pressions cibles correspondant aux pressions de l'hydrogène dans le premier réservoir 10.

Ainsi, pour chaque pression dans le premier réservoir 21, on obtient une pression cible à atteindre au sein de la plage de pression au sortir de la première étape de pompage P1. De cette manière, on optimise la fréquence de fonctionnement des premiers moyens de compression 21 pour limiter la vaporisation partielle de l'hydrogène entre le premier réservoir 10 et les seconds moyens de compression 22.

Chaque calcul de vaporisation partielle de l'hydrogène prend en compte la pression du premier réservoir 10, la pression finale qui doit être atteinte dans le deuxième réservoir 30, les débits de fuite de joints du système, les déperditions thermiques du système, les pertes thermiques par frottement des joints, les pertes thermiques dues aux compressions, et les pertes thermiques dues à l'éjection de l'hydrogène au sortir des moyens de compression. Les moyens de définition 511 sont programmés avec la table de correspondance de manière à permettre de déterminer la pression cible momentanée, correspondant à la pression captée dans le premier réservoir 10 par les capteurs initiaux 11, à laquelle les premiers moyens de compression 21 doivent comprimer et éjecter l'hydrogène dans le volume intermédiaire 4.

Lors de la deuxième étape de pompage P2, les seconds moyens de compression 22 sont mis en fonctionnement et maintenus en fonctionnement si l'hydrogène est dans les conditions supercritiques au sortir de la première étape de pompage P1.

Cette mise en fonctionnement des seconds moyens de compression 22 est assurée par les deuxièmes moyens d'asservissement 52.

De cette manière les seconds moyens de compression 22 ne fonctionnent que lorsque l'hydrogène situé dans le volume intermédiaire 4 est dans un état supercritique.

Le procédé comprend enfin une récupération R1 des pertes d'hydrogène gazeux au cours de la première étape de pompage P1 et de la deuxième étape de pompage P2, ainsi qu'une réinjection R2 de ces pertes d'hydrogène gazeux dans le premier réservoir 10.

Cette récupération R1 et cette réinjection R2 sont mises en œuvre par le premier circuit 6 et le deuxième circuit 7 des circuits de récupération.

En référence à la figure 2, le système et le procédé comprennent également un retour 8 de maintien au froid utilisé lorsque le deuxième réservoir 30 n'est pas disponible.

En outre, le système peut prévoir une soupape d'évacuation d'une surpression entre les premiers moyens de compression 21 et les seconds moyens de compression 22 afin d'éviter d'endommager le système en cas de défaillance et de la survenue d'une surpression trop importante à ce niveau du système.

## Revendications

1. Procédé de transfert d'hydrogène depuis un premier réservoir (10) dans lequel l'hydrogène est à un état initial liquide à une pression de l'ordre de 10 bars jusqu'à un deuxième réservoir (30) dans lequel l'hydrogène est à un état final à une pression supérieure ou égale à 500 bars, le procédé comprenant :
- une première étape de pompage (P1) de l'hydrogène depuis son état initial jusqu'à un état intermédiaire dans lequel l'hydrogène présente une pression supérieure à celle de son état initial ;
- une deuxième étape de pompage (P2) de l'hydrogène depuis son état intermédiaire jusqu'à son état final,
la première étape de pompage (P1) et la deuxième étape de pompage (P2) étant réalisées respectivement par des premiers moyens de compression (21) et des seconds moyens de compression (22) distincts l'un de l'autre, les premiers moyens de compression (21) et les seconds moyens de compression (22) fonctionnant chacun à une fréquence de fonctionnement, les fréquences de fonctionnement étant indépendantes l'une de l'autre, la fréquence de fonctionnement des premiers moyens de compression (21) étant asservie en fonction de la pression de l'hydrogène au sortir de la première étape de pompage (P1) pour la maintenir dans une plage de pression au sortir de la première étape de pompage (P1) correspondant à des conditions supercritiques,
caractérisé et en ce que la fréquence de fonctionnement des premiers moyens de compression (21) est également asservie à la pression de l'hydrogène dans le premier réservoir (10), pour comprimer l'hydrogène jusqu'à une pression cible variable au sein de la plage de pression au sortir de la première étape de pompage (P1), la pression cible variable étant fonction de la pression de l'hydrogène dans le premier réservoir (10).

2. Procédé selon la revendication précédente, **caractérisé en ce que** la fréquence de fonctionnement des premiers moyens de compression (21) est également asservie en fonction de la température de l'hydrogène au sortir de la première étape de pompage (P1) pour le maintenir dans une plage de température au sortir de la première étape de pompage (P1) correspondant à des conditions supercritiques.

3. Procédé selon l'une quelconque des revendications précédentes, **caractérisé en ce qu'**il comprend une étape préalable de détermination (E) d'une table de correspondance des pressions de l'hydrogène dans le premier réservoir (10) avec les pressions cibles au sortir de la première étape de pompage (P1),
dans laquelle, pour une pression de l'hydrogène dans le premier réservoir (10) :
- on calcule une variation d'une valeur de vaporisation partielle de l'hydrogène intervenant entre le premier réservoir (10) et les seconds moyens de compression (22) au cours d'une variation de la pression au sein de la plage de pression au sortir de la première étape de pompage (P1) ;
- on sélectionne la pression, au sein de la plage de pression au sortir de la première étape de pompage (P1), qui engendre la valeur de vaporisation partielle de l'hydrogène la plus faible, cette pression formant la pression cible au sein de la plage de pression au sortir de la première étape de pompage (P1).

4. Procédé selon l'une quelconque des revendications précédentes, **caractérisé en ce que** les seconds moyens de compression (22) sont mis en fonctionnement et maintenu en fonctionnement si l'hydrogène est dans les conditions supercritiques au sortir de la première étape de pompage (P1).

5. Procédé selon l'une quelconque des revendications précédente, **caractérisé en ce qu'**il comprend une récupération (R1) de pertes d'hydrogène gazeux au cours de la première étape de pompage (P1) et de la deuxième étape de pompage (P2), et une réinjection (R2) de ces pertes d'hydrogène gazeux dans le premier réservoir (10).

6. Procédé selon l'une quelconque des revendications précédentes, **caractérisé en ce que**, dans son état intermédiaire, l'hydrogène présente une pression comprise en 50 bars et 90 bars.

7. Système de transfert d'hydrogène comprenant :
- un premier réservoir (10) dans lequel l'hydrogène est à un état initial liquide à une pression de l'ordre de 10 bars ;
- un deuxième réservoir (30) dans lequel l'hydrogène est à un état final à une pression supérieure ou égale à 500 bars ;
- des premiers moyens de compression (21) couplés au premier réservoir (10) pour extraire de l'hydrogène, le comprimer, et l'envoyer dans un volume intermédiaire (4) ;
- des seconds moyens de compression (22) distincts des premiers moyens de compression (21), les seconds moyens de compression (22) étant couplés au volume intermédiaire (4) et au deuxième réservoir (22) pour extraire de l'hydrogène du volume intermédiaire (4), le comprimer, et l'envoyer dans le deuxième réservoir (30),
**caractérisé en ce qu'**il comprend également :
- au moins un capteur intermédiaire (41), dont un capteur de pression (411) destiné à capter la pression dans le volume intermédiaire (4) ;
- des premiers moyens d'asservissement (51) pour asservir en fréquence de fonctionnement les premiers moyens de compression (21) en fonction de la pression captée par le capteur de pression (411) du ou des capteurs intermédiaires (41), en vue de maintenir l'hydrogène du volume intermédiaire (4) dans un état supercritique,
**en ce qu'**il comprend un capteur de pression (111) associé au premier réservoir (10),
et **en ce que** les premiers moyens d'asservissement (51) intègrent des moyens de définition (511) d'une pression cible variable au sein d'une plage de pression correspondant à des conditions supercritiques, la pression cible variable étant fonction d'une pression captée dans le premier réservoir (10), les premiers moyens d'asservissement (51) modulant la fréquence de fonctionnement des premiers moyens de compression (21) pour atteindre la pression cible variable dans le volume intermédiaire (4).

8. Système de transfert selon la revendication précédente, **caractérisé en ce que** les capteurs intermédiaires (41) comprennent également un capteur de température (412).

## Patentansprüche

1. Verfahren zum Transfer von Wasserstoff von einem ersten Behälter (10), in dem sich der Wasserstoff in einem flüssigen Ausgangszustand bei einem Druck von etwa 10 bar befindet, in einen zweiten Behälter (30), in dem sich der Wasserstoff in einem Endzustand bei einem Druck von 500 bar oder mehr befindet, wobei das Verfahren umfasst:
- einen ersten Schritt des Pumpens (P1) des Wasserstoffs aus seinem Ausgangszustand in einen Zwischenzustand, in dem der Wasserstoff einen höheren Druck aufweist als in seinem Ausgangszustand;
- einen zweiten Schritt des Pumpens (P2) des Wasserstoffs aus seinem Zwischenzustand in seinen Endzustand,
wobei der erste Pumpschritt (P1) und der zweite Pumpschritt (P2) jeweils durch voneinander getrennte erste Verdichtungsmittel (21) und zweite Verdichtungsmittel (22) ausgeführt werden,
wobei die ersten Verdichtungsmittel (21) und die zweiten Verdichtungsmittel (22) jeweils mit einer Betriebsfrequenz arbeiten, wobei die Betriebsfrequenzen voneinander unabhängig sind, wobei die Betriebsfrequenz der ersten Verdichtungsmittel (21) in Abhängigkeit vom Druck des Wasserstoffs bei dem Verlassen des ersten Pumpschritts (P1) gesteuert wird, um ihn bei dem Verlassen des ersten Pumpschritts (P1) in einem Druckbereich zu halten, der überkritischen Bedingungen entsprechen, **dadurch gekennzeichnet, dass** die Betriebsfrequenz der ersten Verdichtungsmittel (21) auch den Druck des Wasserstoffs im ersten Behälter (10) steuert, um den Wasserstoff auf einen variablen Zieldruck innerhalb des Druckbereichs bei dem Verlassen des ersten Pumpschritts (P1) zu verdichten, wobei der variable Zieldruck vom Druck des Wasserstoffs im ersten Behälter (10) abhängig ist.

2. Verfahren nach dem vorhergehenden Anspruch, **dadurch gekennzeichnet, dass** die Betriebsfrequenz der ersten Verdichtungsmittel (21) auch in Abhängigkeit von der Temperatur des Wasserstoffs bei dem Verlassen des ersten Pumpschritts (P1) gesteuert wird, um ihn in einem Temperaturbereich bei dem Verlassen des ersten Pumpschritts (P1) zu halten, der überkritischen Bedingungen entspricht.

3. Verfahren nach einem der vorhergehenden Ansprüche, **dadurch gekennzeichnet, dass** es einen vorherigen Schritt des Bestimmens (E) einer Tabelle zur Übereinstimmung der Drücke des Wasserstoffs im ersten Behälter (10) mit den Zieldrücken bei dem Verlassen des ersten Pumpschritts (P1) umfasst,
wobei für einen Druck des Wasserstoffs im ersten Behälter (10) :
- eine Veränderung eines Teilverdampfungswertes des zwischen dem ersten Behälter (10) und den zweiten Verdichtungsmitteln (22) auftretenden Wasserstoffs während einer Druckänderung innerhalb des Druckbereichs bei dem Verlassen des ersten Pumpschritts (P1) berechnet wird;
- der Druck innerhalb des Druckbereichs bei dem Verlassen des ersten Pumpschritts (P1) ausgewählt wird, der den geringsten Teilverdampfungswert des Wasserstoffs erzeugt, wobei dieser Druck den Zieldruck innerhalb des Druckbereichs bei dem Verlassen des ersten Pumpschritts (P1) bildet.

4. Verfahren nach einem der vorhergehenden Ansprüche, **dadurch gekennzeichnet, dass** die zweiten Verdichtungsmittel (22) in Betrieb genommen und in Betrieb gehalten werden, wenn sich der Wasserstoff bei dem Verlassen des ersten Pumpschritts (P1) in den überkritischen Bedingungen befindet.

5. Verfahren nach einem der vorhergehenden Ansprüche, **dadurch gekennzeichnet, dass** es eine Rückgewinnung (R1) von gasförmigen Wasserstoffverlusten während des ersten Pumpschritts (P1) und des zweiten Pumpschritts (P2) und eine Rückeinspeisung (R2) dieser gasförmigen Wasserstoffverluste in den ersten Behälter (10) umfasst.

6. Verfahren nach einem der vorhergehenden Ansprüche, **dadurch gekennzeichnet, dass** Wasserstoff in seinem Zwischenzustand einen Druck zwischen 50 bar und 90 bar aufweist.

7. Wasserstofftransfersystem, umfassend:
- einen ersten Behälter (10), in dem sich der Wasserstoff bei einem Druck in der Größenordnung von 10 bar in einem flüssigen Ausgangszustand befindet;
- einen zweiten Behälter (30), in dem sich der Wasserstoff in einem Endzustand bei einem Druck von größer oder gleich 500 bar befindet;
- erste Verdichtungsmittel (21), die mit dem ersten Behälter (10) gekoppelt sind, um Wasserstoff zu extrahieren, zu verdichten und in ein Zwischenvolumen (4) zu leiten;
- zweite Verdichtungsmittel (22), die von den ersten Verdichtungsmitteln (21) getrennt sind, wobei die zweiten Verdichtungsmittel (22) mit dem Zwischenvolumen (4) und dem zweiten Behälter (22) gekoppelt sind, um Wasserstoff aus dem Zwischenvolumen (4) zu extrahieren, zu verdichten und in den zweiten Behälter (30) zu leiten, **dadurch gekennzeichnet, dass** sie ferner umfassen:
- mindestens einen Zwischensensor (41), darunter einen Drucksensor (411), der dazu bestimmt ist, den Druck im Zwischenvolumen (4) zu erfassen;
- erste Steuermittel (51) zum Steuern der Betriebsfrequenz der ersten Verdichtungsmittel (21) in Abhängigkeit vom vom Drucksensor (411) des oder der Zwischensensoren (41) erfassten Druck, um den Wasserstoff des Zwischenvolumens (4) in einem überkritischen Zustand zu halten, dass er einen mit dem ersten Behälter (10) verbundenen Drucksensor (111) umfasst, und dass die ersten Steuermittel (51) Definitionsmittel (511) eines variablen Zieldrucks innerhalb eines Druckbereichs integrieren, der überkritischen Bedingungen entspricht, wobei der variable Zieldruck von einem im ersten Behälter (10) erfassten Druck abhängt, wobei die ersten Steuermittel (51) die Betriebsfrequenz der ersten Verdichtungsmittel (21) modulieren, um den variablen Zieldruck im Zwischenvolumen (4) zu erreichen.

8. Transfersystem nach dem vorhergehenden Anspruch, **dadurch gekennzeichnet, dass** die Zwischensensoren (41) auch einen Temperatursensor (412) umfassen.

## Claims

1. Method for transferring hydrogen from a first tank (10) in which the hydrogen is in an initial liquid state at a pressure in the range of 10 bar to a second tank (30) in which the hydrogen is in a final state at a pressure higher than or equal to 500 bar, the method comprising:
- a first step (P1) of pumping the hydrogen from its initial state to an intermediate state in which the hydrogen has a pressure higher than that of its initial state;
- a second step (P2) of pumping the hydrogen from its intermediate state to its final state,
the first pumping step (P1) and the second pumping step (P2) being carried out respectively by first compression means (21) and second compression means (22) separate from each other,
the first compression means (21) and the second compression means (22) each operating at an operating frequency, the operating frequencies being independent of each other, the operating frequency of the first compression means (21) being servo-controlled according to the pressure of the hydrogen at the end of the first pumping step (P1) to maintain it in a pressure range at the end of the first pumping step (P1) corresponding to supercritical conditions, **characterised in that** the operating frequency of the first compression means (21) is also servo-controlled to the pressure of the hydrogen in the first tank (10), to compress the hydrogen to a variable target pressure within the pressure range at the end of the first pumping step (P1), the variable target pressure being dependent on the pressure of the hydrogen in the first tank (10).

2. Method according to the preceding claim, **characterised in that** the operating frequency of the first compression means (21) is also servo-controlled according to the temperature of the hydrogen at the end of the first pumping step (P1) to maintain it in a temperature range at the end of the first pumping step (P1) corresponding to supercritical conditions.

3. Method according to any one of the preceding claims, **characterised in that** it comprises a prior step (E) of determining a correspondence table of the pressures of the hydrogen in the first tank (10) with the target pressures at the end of the first pumping step (P1),
in which, for a pressure of the hydrogen in the first tank (10) :
- a variation of a partial vaporisation value of the hydrogen occurring between the first tank (10) and the second compression means (22) during a variation of the pressure within the pressure range at the end of the first pumping step (P1) is calculated;
- the pressure is selected, within the pressure range at the end of the first pumping step (P1), which generates the lowest partial vaporisation value of the hydrogen, this pressure forming the target pressure within the pressure range at the end of the first pumping step (P1).

4. Method according to any one of the preceding claims, **characterised in that** the second compression means (22) are set in operation and kept in operation if the hydrogen is in the supercritical conditions at the end of the first pumping step (P1).

5. Method according to any one of the preceding claims, **characterised in that** it comprises a recovery (R1) of gaseous hydrogen losses during the first pumping step (P1) and the second pumping step (P2), and a reinjection (R2) of these gaseous hydrogen losses into the first tank (10).

6. Method according to any one of the preceding claims, **characterised in that**, in its intermediate state, the hydrogen has a pressure between 50 bar and 90 bar.

7. System for transferring hydrogen comprising:
- a first tank (10) in which the hydrogen is in an initial liquid state at a pressure in the range of 10 bar;
- a second tank (30) in which the hydrogen is in a final state at a pressure higher than or equal to 500 bar;
- first compression means (21) coupled with the first tank (10) for extracting hydrogen, compressing it, and sending it into an intermediate volume (4);
- second compression means (22) separate from the first compression means (21), the second compression means (22) being coupled with the intermediate volume (4) and with the second tank (22) to extract hydrogen from the intermediate volume (4), compress it, and send it into the second tank (30), **characterised in that** it also comprises:
- at least one intermediate sensor (41), including a pressure sensor (411) intended to detect the pressure in the intermediate volume (4);
- first servo-control means (51) for servo-controlling the operating frequency of the first compression means (21) according to the pressure detected by the pressure sensor (411) of the intermediate sensor(s) (41), in order to maintain the hydrogen of the intermediate volume (4) in a supercritical state, **in that** it comprises a pressure sensor (111) associated with the first tank (10), and **in that** the first servo-control means (51) integrate means (511) for defining a variable target pressure within a pressure range corresponding to supercritical conditions, the variable target pressure being dependent on a pressure detected in the first tank (10), the first servo-control means (51) modulating the operating frequency of the first compression means (21) to reach the variable target pressure in the intermediate volume (4).

8. Transfer system according to the preceding claim, **characterised in that** the intermediate sensors (41) also comprise a temperature sensor (412).
